# EUROPEAN PATENT APPLICATION

(11) **EP 4 167 097 A1**
(43) Date of publication of application: **19.04.2023**
(21) Application number: 21382919.5
(22) Date of filing: 13.10.2021
(51) Int. Cl.: G06F 12/0864, G06F 12/14

(54) **HANDLING MEMORY-LINES IN A MULTI-CORE PROCESSOR**

(71) Applicant: Universidad de Murcia, 30071 Murcia (ES)
(72) Inventor: GÓMEZ HERNÁNDEZ, Eduardo José, 30100 Murcia (ES); CEBRIÁN GONZÁLEZ, Juan Manuel, 30100 Murcia (ES); TITOS GIL, José Rubén, 30100 Murcia (ES); ROS BARDISA, Alberto, 30100 Murcia (ES); KAXIRAS, Stefanos, 30100 Murcia (ES)
(74) Representative: ZBM Patents - Zea, Barlocci & Markvardsen

(57) **Abstract**

Methods are provided of handling memory-lines affected by an instruction set to be executed in multi-core processor with affected memory-lines locked. These methods comprise: classifying affected memory-lines into classifications such that affected memory-line(s) mappable to same or affected memory-set are classified into same classification; requesting multi-line lock operation for each classification with several affected memory-lines, said multi-line lock operation including locking the several affected memory-lines in the private cache of the core executing the instruction set (or executor core) and loading the several affected memory-lines in the shared cache such that a sum of the several affected memory-lines and a number of pre-existing conflicting memory-lines loaded in the affected memory-set does not exceed memory-set capacity; and requesting, for each classification with single memory-line, locking the single memory-line in the private cache of the executor core. Systems, computing systems and computer programs suitable to perform said methods are also disclosed.

## Description

The present disclosure relates to methods of handling memory-lines affected by an instruction set to be executed in a multi-core processor with the affected memory-lines locked, and to computer programs, systems, and computing systems suitable for performing such methods.

### BACKGROUND

In the field of multi-core processors several components cooperate to execute various computer programs concurrently or in parallel. Multi-core processors include several processor cores each having a private cache, and a main memory having a shared cache. There must thus exist in multi-core processors a complex handling of memory-lines between main memory and shared and private caches to facilitate reliable and efficient parallel execution of computer programs. Memory-lines are loaded in and unloaded from different (main, shared, private) memories/caches at run-time in order to achieve such a purpose of reliable and efficient parallel executions. Instructions composing computer programs are uninterruptible which means that whole instruction or nothing of the instruction has to be executed in order to avoid deficient executions and, therefore, inadequate operation of the multi-core system. Memory-lines are locked when needed to ensure that different executions being concurrently/simultaneously performed by different cores will not interfere with each other and will not produce, e.g., data inconsistencies or lack of data integrity. Memory-lines that have been locked must be unlocked once execution of instruction/s affecting them has/have been completed, in order to make said memory-lines available to other executions. Handling memory-lines in said context is thus very difficult and there still are many issues to be solved so as to improve reliability and efficiency in multi-core processors.

An object of the present disclosure is to provide new methods, systems and computer programs aimed at improving prior art methods, systems and computer programs for handling memory-lines affected by instruction set to be executed in a multi-core processor with the affected memory-lines locked.

### SUMMARY

In an aspect, methods are provided of handling memory-lines affected by an instruction set to be executed in a multi-core processor with the affected memory-lines locked. The multi-core processor comprises a plurality of cores and a main memory. Each of the cores has a private cache, and the main memory has a shared cache. Each of the private caches and the shared cache are structured in memory-sets, each memory-set having a capacity in memory-ways, each memory-way configured to contain or accommodate a memory-line. These methods (also denominated handling methods herein) comprise classifying the affected memory-lines into one or more classifications in such a way that affected memory-line or lines mapped or mappable to same memory-set (or affected memory-set) are classified into same classification. Each of said classifications is a single-line classification with single memory-line or a multi-line classification with multiple quantity of memory-lines conflicting to each other due to their mapping or mappability to the same affected memory-set. Handling methods further comprise requesting a multi-line lock operation for each multi-line classification. The multi-line lock operation includes locking the multiple conflicting memory-lines in the private cache of the core executing the instruction set (also denominated executor core herein) and loading the multiple conflicting memory-lines in the shared cache in such a way that a sum of the multiple quantity of conflicting memory-lines and a number of pre-existing conflicting memory-lines loaded in the affected memory-set does not exceed the memory-set capacity. Handling methods still further comprise requesting, for each single-line classification with single memory-line, a single-line lock operation including locking the single memory-line in the private cache of the executor core.

The instruction set may include a first section or block with lock instructions indicating which are the affected memory-lines to be locked, a second section or block with calculation instructions affecting the memory-lines to be locked according to first section or block, and a third section or block including unlock instructions to reverse previously performed locks according to first section or block. Pre-existing conflicting memory-lines loaded in the affected memory-set refer to memory-lines affected by another one or more instruction-set executions performed by e.g. another one or more cores, that are conflictive between them because they affect same memory-set.

An advantage of proposed handling methods may be that the loading of the multiple conflicting memory-lines (in the multi-line classification) into the affected memory-set limited to not exceed the capacity of the affected memory-set avoids deadlocks caused by interference with other cores onto the (same) affected memory-set. Such an interference with other cores may cause saturation of the affected memory-set, and this may lead to deadlock if e.g. the affected memory-set results saturated at half or uncompleted execution of different instruction sets onto the affected memory-set. Since, in handling methods according to present disclosure, no overload or saturation of memory-sets due to interference between different cores can occur, deadlocks due to said reason are avoided. Another advantage may be that single lock instruction or operation can cause locking of several memory-lines that are needed by the instruction set to be locked, which represents an improvement in the sense that with only one lock instruction or operation several memory-lines can be locked ensuring deadlock avoidance. Hence, more efficient deadlock-free handling methods are herein provided in comparison to prior art methods with same or similar purpose.

The claimed limitation to not exceed memory-set capacity may be implemented in many different manners. In first examples, the loading into the shared cache of the multiple conflicting memory-lines in multi-line classification may be based on locking the affected memory-set so it can only be used by the executor core during execution of the instruction set. This manner, interferences between different cores are eluded. With the locking of the affected memory-set, it is ensured that the affected memory-set is at full disposal of the executor core and, therefore, the number of pre-existing conflicting memory-lines loaded in the affected memory-set is (forced to be) zero. This set-lock approach may require e.g. an extra bit per memory-set to indicate locked or unlocked memory-set. If the affected memory-set is found locked by another core, the executor core may wait until it is unlocked by the other core. Once unlocked, the executor core may proceed to lock the affected memory-set to perform execution of its instruction set. Once execution of the instruction set has been completed, the affected memory-set in shared cache along with previously locked memory-lines in private cache may be accordingly unlocked.

In second examples, the loading into the shared cache of the multiple conflicting memory-lines in multi-line classification may be based on firstly verifying available space in affected memory-set and secondly proceeding to the loading if said condition is satisfied. In other words, it may be verified whether there is available space in the shared cache for loading therein the multiple conflicting memory-lines and, in case of confirmed availability, the multiple conflicting memory-lines may be loaded into the affected memory-set. The availability condition may correspond to whether the sum of the multiple quantity of conflicting memory-lines (to be loaded) and the number of pre-existing conflicting memory-lines loaded in the affected memory-set does not exceed the memory-set capacity. The availability condition may be determined based on a counter of available or empty memory-ways per memory-set. This availability counter may be accordingly updated each time memory-ways are occupied (availability counter decrement) and each time memory-ways are released or freed-up (availability counter increment). If it is found that no sufficient space is available in the affected memory-set, the executor core may wait until sufficient space in the affected memory-set is available. Once sufficient space is available, the loading of the multiple conflicting memory-lines into the affected memory-set may be performed.

In third examples, the loading into the shared cache of the multiple conflicting memory-lines (in the multi-line classification) may be based on an ordering of the affected memory-lines and a mapping between positions in multi-line classification and in memory-set, both predefined for all the cores in the multi-core processor. The classifying of the affected memory-lines may thus include ordering the affected memory-lines according to ordering criterion (predefined for all the cores) and the loading of the multiple conflicting memory-lines may be performed based on mapping criterion (also predefined for all the cores) taking into account the order caused by the ordering criterion. It may be first determined, for each conflicting memory-line in the multi-line classification, a memory-way in the affected memory-set into which the conflicting memory-line is to be loaded according to the mapping criterion between memory-line positions in multi-line classification and memory-ways in memory-set. Once corresponding memory-way has been determined for each conflicting memory-line in the multi-line classification, each conflicting memory-line may be loaded into the memory-way (of the affected memory-set) that has been determined for said conflicting memory-line. In a particular example of predefined ordering and mapping criteria, first ordered conflicting memory-line (in the multi-line classification) may be defined to be loaded into first memory-way, second ordered conflicting memory-line into second memory-way, third ordered conflicting memory-line into third memory-way, and so on. If a memory-way to be occupied in the affected memory-set according to the ordering and mapping criteria is found occupied by another core, the executor core may wait until said memory-way is released by the other core. Once all the memory-ways to be occupied by the multiple conflicting memory-lines (in the multi-line classification) are found available, each conflicting memory-line (in the multi-line classification) may be loaded into its determined memory-way of the affected memory-set.

In fourth examples, the loading into the shared cache of the multiple conflicting memory-lines (in the multi-line classification) may be based on determination of first available memory-way and sequential loading from it. That is, it may be determined first available memory-way in the affected memory-set from which the multiple conflicting memory-lines (in the multi-line classification) are to be loaded or loadable sequentially into the affected memory-set. Once determined said first available memory-way, the multiple conflicting memory-lines (in the multi-line classification) may be loaded sequentially into the affected memory-set starting from the determined first available memory-way. The first available memory-way may be determined based on a counter pointing to the first available memory-way in the affected memory-set. This pointing counter may be accordingly updated each time memory-ways are occupied (pointing counter increment) and each time memory-ways are released or freed-up (pointing counter decrement). If it is found that no sufficient space is available in the affected memory-set starting from the first available memory-way, the executor core may wait until sufficient space in the affected memory-set is available. Once sufficient available space is found, the sequential loading of the multiple conflicting memory-lines into the affected memory-set may be performed starting from the determined first available memory-way.

In an atomic approach, the instruction set to be executed may be configured as a single atomic instruction whose execution causes execution of the instruction set atomically and constrained to affect an amount of memory-lines equal or less than the memory-set capacity. In a non-atomic approach, the instruction set to be executed (not atomically) may be constrained to affect an amount of memory-lines less than the memory-set capacity. In non-atomic approach, Operating System (OS) may execute OS operations between different instructions of the non-atomic instruction set because OS operates without using (or not influenced by) proposed handling methods. Taking this into account, quantity of affected memory-lines constrained to be less than memory-set capacity ensures that there is always at least one memory-line in the memory-set available to the OS and, therefore, deadlock due to saturation of said memory-set is avoided. In worst case that all affected memory-lines belong to same memory-set, such a constraint may ensure that one memory-line in said memory-set is available for execution of OS operations between instructions of the non-atomic instruction set. In atomic approach, quantity of affected memory-lines may be equal or less (not only less as in non-atomic approach) than memory-set capacity, since atomic execution of the instruction set implies that no OS operation is executed between instructions of the atomic instruction set. Any of these constraints in atomic approach and/or non-atomic approach make the suggested handling methods free of deadlocks, at least for the cited reasons. Instruction sets according to both atomic and non-atomic approach may coexist in or may be handled by same handling system, also in same multi-core processor.

In some implementations, handling methods may further comprise evicting memory-line(s) from shared cache and/or private cache(s) when it is needed to free up cache space during execution of handling method. In this context, handling methods may further comprise verifying whether occupancy of an eviction buffer affected by the eviction to be performed, or to be used for evicting memory-line(s), exceeds a predefined occupancy threshold. If predefined occupancy threshold is exceeded, the eviction may be performed without using the eviction buffer, i.e. once pertinent acknowledgement from main memory has been received or detected. This non-use of eviction buffer when it is considered excessively full (above occupancy threshold) may permit avoiding deadlock(s) due to saturation of eviction buffer because, e.g., it is being used to serve several cores.

Once completion of the execution of the instruction set is detected, all the previously requested and performed locks required to execute the instruction set may be undone or cancelled by requesting corresponding unlocks.

In a further aspect, computer programs are provided comprising program instructions for causing a computing system to perform methods of handling memory-lines affected by an instruction set to be executed in a multi-core processor with the affected memory-lines locked, such as the ones described in other parts of the disclosure. Such computer programs may be embodied on a storage medium and/or carried on a carrier signal.

In a still further aspect, computing systems are provided for handling memory-lines affected by an instruction set to be executed in a multi-core processor with the affected memory-lines locked, said computing systems comprising a memory and a processor, embodying instructions stored in the memory and executable by the processor, and the instructions comprising functionality or functionalities to execute methods of handling memory-lines affected by an instruction set to be executed in a multi-core processor with the affected memory-lines locked, such as the ones described in other parts of the disclosure.

In a yet further aspect, systems are provided for handling memory-lines affected by an instruction set to be executed in a multi-core processor with the affected memory-lines locked. The multi-core processor comprises a plurality of cores and a main memory. Each of the cores has a private cache, and the main memory has a shared cache. Each of the private caches and the shared cache are structured in in memory-sets, each memory-set having a capacity in memory-ways, each memory-way configured to contain or accommodate a memory-line. These systems (also denominated handling systems herein) comprise a classifier module, a multi-lock module and a single-lock module. The classifier module is configured to classify the affected memory-lines into one or more classifications in such a way that affected memory-line or lines mapped or mappable to same memory-set (or affected memory-set) are classified into same classification. Each of said classifications are a single-line classification with single memory-line or a multi-line classification with multiple quantity of memory-lines conflicting to each other due to their mapping or mappability to the same (or affected) memory-set. The multi-lock module is configured to request a multi-line lock operation for each multi-line classification. Said multi-line lock operation includes locking the multiple conflicting memory-lines in the private cache of the executor core, and loading the multiple conflicting memory-lines in the shared cache in such a way that a sum of the multiple quantity of conflicting memory-lines and a number of pre-existing conflicting memory-lines loaded in the affected memory-set does not exceed the memory-set capacity. The single-lock module is configured to request, for each single-line classification with single memory-line, a single-line lock operation including locking the single memory-line in the private cache of the executor core.

In examples, multi-core processors may be provided including, for each core in the multi-core processor, a system or computing system for handling memory-lines affected by an instruction set to be executed in the multi-core processor with the affected memory-lines locked, such as the ones described in other parts of the disclosure.

### BRIEF DESCRIPTION OF THE DRAWINGS

Non-limiting examples of the present disclosure will be described in the following, with reference to the appended drawings, in which:
Figure 1 shows a schematic representation of systems for handling memory-lines affected by an instruction set to be executed in a multi-core processor with the affected memory-lines locked, according to examples.
Figure 2 is a flow chart schematically illustrating methods of handling memory-lines affected by an instruction set to be executed in a multi-core processor with the affected memory-lines locked, according to examples.

### DETAILED DESCRIPTION OF EXAMPLES

In these figures the same reference signs may be used to designate or indicate same or similar elements.

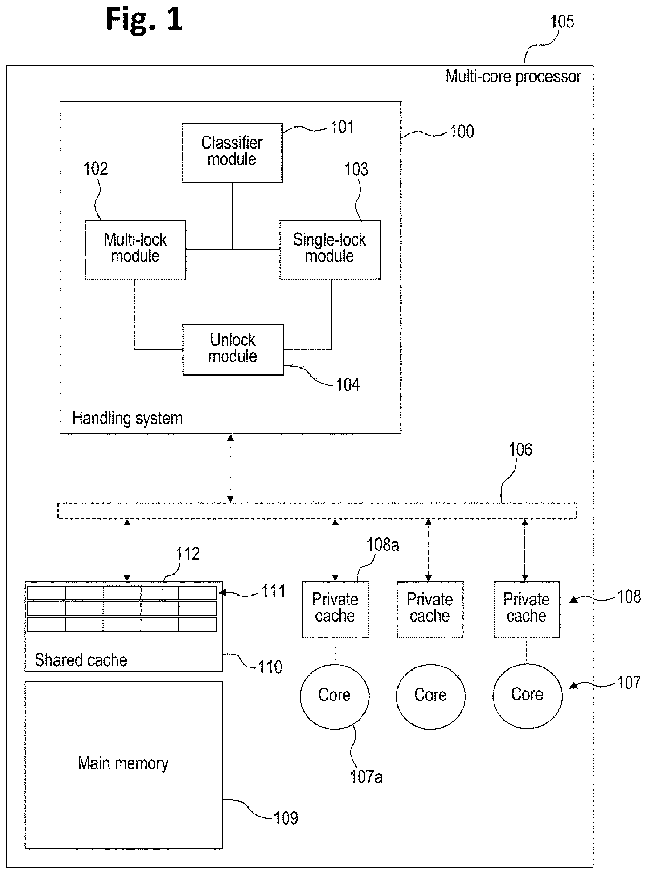

Figure 1 illustrate handling systems 100 for handling memory-lines affected by an instruction set to be executed in a multi-core processor with the affected memory-lines locked. These handling systems 100 may comprise a classifier module 101, a multi-lock module 102, a single-lock module 103, and an unlock module 104.

The multi-core processor 105 may include several cores 107 and a main memory 109. Each of the cores 107 may have its associated private cache 108. Main memory 109 may have a shared cache 110. Shared cache 110 and each of the private caches 108 may be structured in memory-sets 111 each having a capacity in memory-ways each configured to contain or accommodate a memory-line 112. The cores 107 may be configured to execute instruction sets within the multi-core processor in cooperation with other components therein. Handling systems 100 may be configured to handle memory-lines affected by an instruction set to be executed by one of the cores 17a with the affected memory-lines locked, so as to avoid undesired interferences with other cores and/or between instructions within the instruction set itself. Handling systems 100, cores 107 and private caches 108, and main memory 109 and shared cache 110 may be connected to each other through suitable bus 106, so that they can interchange or communicate data or signals between them to make the multi-processor to operate as such.

In the particular examples illustrated in Figure 1, only one handling system 100 is shown for reasons of simplicity, but it is noted that each of the cores 107 may have its particular handling system 100 dedicated to handle memory-lines affected by instruction sets executed by the core.

The classifier module 101 may be configured to classify the affected memory-lines 112 into one or more classifications, in such a way that affected memory-line or lines mappable to same (or affected) memory-set 111 are classified into same classification. This classification may be implemented in any known manner such as, e.g., by ordering or sorting the affected memory-lines 112 in such a way that affected memory-line or lines mappable to same memory-set 111 are classified with e.g. same order number. Classifying or sorting affected memory-lines may refer to classifying or sorting (memory) addresses of the affected memory-lines, not the content of the memory-lines. Memory-line addresses may be configured to indicate memory-set to which memory-line is mappable when cached. Taking this into account, any known manner of classifying or sorting memory-lines may be used, whenever the affected memory-lines result clustered or grouped into groups each including all the affected memory-lines mappable to same memory-set.

The classification may produce two types of classifications: single-line classification and multi-line classification. Single-line classification may refer to a classification including only one memory-line mappable to same (or affected) memory-set. Multi-line classification may refer to a classification including multiple quantity of conflicting memory-lines mappable to same (or affected) memory-set. The multiple conflicting memory-lines within same multi-line classification (same order number in order-based implementations) may include a first and a last memory-line according to, e.g., position of the multiple conflicting memory-lines relative to each other in the multi-line classification. As described in other parts of the disclosure, these concepts of first and last memory-lines in same multi-line classification may be used to handle in more optimal manner memory-lines within same multi-line classification when, e.g., locking and/or unlocking them.

The multi-lock module 102 may be configured to request a multi-line lock operation for each multi-line classification (e.g. with same order number). The requesting of the multi-lock operation may include requesting loading of the multiple conflicting memory-lines in the shared cache 110 in such a way that a sum of the multiple quantity of conflicting memory-lines and a number of pre-existing conflicting memory-lines loaded in the affected memory-set does not exceed the memory-set capacity, along with requesting individual locking of the multiple conflicting memory-lines 112 in the private cache 108a of the executor core 107a. Said requesting of multi-line lock operation may be performed just once for all the multiple conflicting memory-lines 112 in the multi-line classification (e.g. with same order number). For example, said single multi-line lock request may be performed only for the first memory-line (as defined in other parts of the description) within the multi-line classification (e.g. with same order number). The multi-lock operation may be implemented in many manners of which some examples are provided below with reference to various approaches.

In herein denominated set-lock approaches, the loading into the shared cache of the multiple conflicting memory-lines may be based on locking the affected memory-set in such a way that it is fully available for loading the multiple conflicting memory-lines therein. This fully availability means that the number of pre-existing conflicting memory-lines loaded in the affected memory-set is (forced to be) zero. This locking at memory-set level may be implemented by using an extra bit per memory-set whose value may indicate locked (e.g. bit = 1) or unlocked (e.g. bit = 0). If it is detected that the affected memory-set is currently locked (because e.g. bit = 1) by another core, the executor core may wait until the affected memory-set is unlocked by the other core. Once it has been unlocked by the other core, the multiple conflicting memory-lines may be loaded into the affected memory-set to execute the instruction set without interferences with other cores.

In herein denominated availability approaches, the loading into the shared cache of the multiple conflicting memory-lines may be performed depending on e.g. whether an availability counter associated to the affected memory-set indicates that there is sufficient available space (i.e. memory-ways) in the affected memory-set so as to load the multiple conflicting memory-lines. If the availability counter reflects that sufficient space is available in the affected memory-set, the multiple conflicting memory-lines may be loaded into the affected memory-set. The availability counter may be accordingly updated each time memory-ways are released (availability counter increase) and each time memory-ways are occupied (availability counter decrease). The availability condition (sufficient available memory-ways) may thus correspond to whether the sum of the multiple quantity of conflicting memory-lines (to be loaded) and the number of pre-existing conflicting memory-lines loaded in the affected memory-set does not exceed the memory-set capacity. The availability counter may thus contain or reflect a difference between the memory-set capacity and the pre-existing conflicting memory-lines loaded in the affected memory-set. If it is determined that there is no sufficient space in the affected memory-set, the executor core may wait until sufficient memory-ways are released (by another core) and, therefore, the multiple conflicting memory-lines finally fit in the affected memory-set.

In herein denominated mapping approaches, the loading into the shared cache of the multiple conflicting memory-lines may be implemented based on a combination of ordering criterion and mapping criterion, both predefined for all the cores in the multi-core processor. Classification of the affected memory-lines (performed by or at e.g. the classifier module 101) may include ordering the affected memory-lines according to ordering criterion (predefined for all the cores). This classification with predefined ordering may then be used to load into the shared cache the multiple conflicting memory-lines in cooperation with mapping criterion (also predefined for all the cores) in following manner. The predefined mapping criterion may define a mapping or one-to-one correspondence between memory-line positions within multi-line classification and memory-ways in memory-set. In particular examples, the mapping criterion may define first-to-first correspondence (i.e. first memory-line is to be loaded into first memory-way), second-to-second correspondence, third-to-third correspondence, and so on. Taking these principles into account, it may be determined, for each conflicting memory-line in the multi-line classification, a particular memory-way in the affected memory-set into which the conflicting memory-line is to be loaded according to the one-to-one correspondence defined by the mapping criterion. Once all the particular memory-ways to be occupied have been determined and none of them is engaged due to another instruction-set execution (by e.g. another core), each conflicting memory-line in the multi-line classification may be loaded into its determined memory-way of the affected memory-set. If it is determined that at least one of the memory-ways to be occupied is still engaged by another instruction-set execution, the executor core may wait until the still engaged memory-way is released or freed up.

In herein denominated sequential approaches, the loading into the shared cache of the multiple conflicting memory-lines (in the multi-line classification) may be based on a sequential loading starting from first available memory-way in the affected memory-set.

These approaches may be implemented by using e.g. a pointing counter per memory-set indicating which is the first memory-way in the memory-set that is available to receive a memory-line and from which sequential loading may be performed. Taking these principles into account, it may be determined the first available memory-way in the affected memory-set by consulting the pointing counter. Once said first available memory-way in the affected memory-set has been determined, it may be verified whether the multiple conflicting memory-lines can fit the affected memory-set in sequential manner starting from the determined first available memory-way. In case of true or positive result of said verification, the multiple conflicting memory-lines may be loaded sequentially into the affected memory-set starting from the determined first available memory-way. Otherwise, the executor core may wait until there is sufficient available space in the affected memory-set to sequentially load the multiple conflicting memory-lines. Once it is determined that sufficient sequential space (i.e. memory-ways) is available, the multiple conflicting memory-lines may be finally loaded into the memory-set sequentially starting from the determined first available memory-way. The pointing counter may be accordingly updated each time memory-ways are released (availability counter decrease) and each time memory-ways are occupied (availability counter increase). When the pointing counter reaches its maximum value (i.e. memory-set capacity), it may be restarted.

Herein denominated multi-line lock operation may include multiple locking requests. A first of said multiple locking requests may include requesting the private cache 108a of the executor core 107a to load or have loaded with exclusivity the multiple conflicting memory-lines in its private cache 108a. A second of said multiple locking requests may include requesting to the shared cache 110 permission to lock the multiple conflicting memory-lines (at memory-line and memory-set level). Shared cache 110 may be requested to determine said permission depending on whether the affected memory-set to which the multiple conflicting memory-lines are mapped or mappable is currently locked or not (by or because of another of the cores) in the shared cache 110. A third of said multiple locking requests may include requesting locking of the multiple conflicting memory-lines in the private cache 108a once loaded with exclusivity and once locking permission from shared cache 110 has been granted.

The single-lock module 103 may be configured to request, for each single-line classification with single memory-line 112, a single-line lock operation including locking the single memory-line 112 in the private cache 108a of the executor core 107a. Herein denominated single-line lock operation may include requesting the private cache 108a of the executor core 107a to load or have loaded with exclusivity the single memory-line into the private cache 108a, and to lock the single memory-line in the private cache 108a once loaded with exclusivity into the private cache 108a.

The unlock module 104 may be configured to reverse each of the previously performed locks by executing corresponding unlocks.

The instruction set to be executed may be defined according to either an atomic approach or a non-atomic approach. In atomic approach, the instruction set may be defined as a single atomic instruction whose execution causes execution of the instruction set atomically. In non-atomic approach, said execution atomicity is disregarded. In non-atomic approach, the instruction set may be limited to affect an amount of memory-lines less than the number of memory-ways per memory-set. This may permit avoiding deadlock(s) due to overload or saturation of the affected memory-set since, with this limitation, there is always at least one memory-line available in affected memory-set for the Operating System (OS) to execute OS operations between one and next instruction in the instruction set. In atomic approach, the instruction set may be limited to affect an amount of memory-lines equal or less than the number of memory-lines (or ways) per memory-set. This less restricted constraint (equal or less) in comparison to the one of the non-atomic approach (only less) also permits avoiding deadlock(s) due to overload or saturation of the affected memory-set, since in atomic approach no OS operation is executed between one and next instruction in the instruction set.

As commented in other parts of the description, during handling method execution, some of the shared and/or private caches may need to evict some memory-line(s) so as to have available cache space to operate. Handling methods according to present disclosure may thus further include evicting memory-line(s) from shared and/or private cache through eviction buffer. In this scenario, handling methods may include verifying whether occupancy of eviction buffer to be used for evicting memory-line(s) exceeds a predefined occupancy threshold. If said occupancy threshold is exceeded (i.e. eviction buffer is excessively full), eviction may be performed without using the eviction buffer, i.e. once pertinent acknowledgement from main memory is detected or received. Eviction buffer is normally used to evict memory-line(s) from cache temporarily so as to free-up cache space before whole eviction operation is completed. By not using eviction buffer when it is determined saturated or near saturation, deadlock due to eviction buffer fullness is avoided.

As used herein, the term "module" may be understood to refer to software, firmware, hardware and/or various combinations thereof. It is noted that the modules are exemplary.

The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated, or linked to corresponding methods proposed herein of handling memory-lines, and/or to other components that may be local or remote to one another. Additionally, the modules may be moved from one device and added to another device, and/or may be included in both devices, associated to corresponding methods proposed herein of handling memory-lines. Any software implementations may be tangibly embodied in one or more storage media, such as e.g. a memory device, a floppy disk, a compact disk (CD), a digital versatile disk (DVD), or other devices that may store computer code.

Systems for handling memory-lines according to present disclosure may be implemented by computing resources, electronic resources, or a combination thereof. The computing resources may be a series of instructions (e.g. a computer program) and then the systems for handling memory-lines may comprise a memory and a processor, embodying said series of instructions stored in the memory and executable by the processor. These instructions may comprise functionality or functionalities to execute corresponding methods of handling memory-lines such as e.g. the ones described in other parts of the disclosure.

In case the systems for handling memory-lines are implemented only by electronic resources, a controller of the system may be, for example, a CPLD (Complex Programmable Logic Device), an FPGA (Field Programmable Gate Array) or an ASIC (Application-Specific Integrated Circuit).

In case the systems for handling memory-lines are a combination of electronic and computing resources, the computing resources may be a series of instructions (e.g. a computer program) and the electronic resources may be any electronic circuit capable of implementing corresponding method-steps of the methods proposed herein of handling memory-lines, such as the ones described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the methods of handling memory-lines according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other resources.

When the computer program(s) is/are embodied in a signal that may be conveyed directly by a cable or other device or resources, the carrier may be constituted by such cable or other device or resources. Alternatively, the carrier may be an integrated circuit in which the computer program(s) is/are embedded, the integrated circuit being adapted for performing, or for use in the performance of, the methods proposed herein of handling memory-lines.

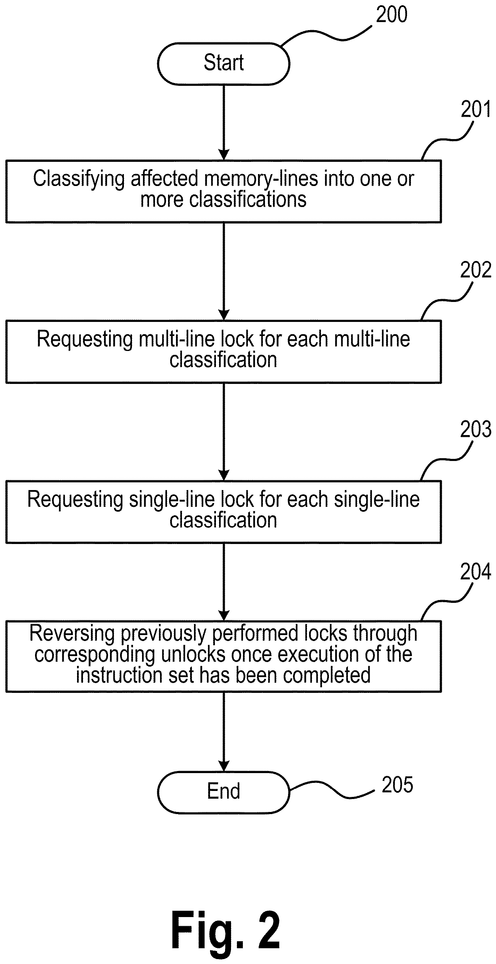

Figure 2 is a flow chart schematically illustrating methods of handling memory-lines affected by an instruction set to be executed in a multi-core processor with the affected memory-lines locked, according to examples. As generally shown in the figure, handling methods according to Figure 2 may be initiated (e.g. at method block 200) upon detection of a starting condition such as e.g. detection of an instruction set to be executed. Since methods according to Figure 2 are performable by systems according to Figure 1, number references from said Figure 1 may be reused in the following description of Figure 2.

Handling methods according to Figure 2 may further include (e.g. at method block 201) classifying the affected memory-lines 112 into one or more classifications, in such a way that affected memory-line or lines mappable to same memory-set 111 are classified into same classification. Since this "classification" functionality (implemented at e.g. method block 201) is performable by a module such as the classifier module 101 of the handling system 100 of Figure 1, functional details and considerations previously explained with respect to said module 101 may be similarly attributed to method block 201.

Handling methods according to Figure 2 may further include (e.g. at method block 202) requesting multi-line lock operation for each multi-line classification, the multi-line lock operation including locking the multiple conflicting memory-lines in the private cache 108a of the executor core 107a, and loading the multiple conflicting memory-lines in the shared cache 110 in such a way that a sum of the multiple quantity of conflicting memory-lines and a number of pre-existing conflicting memory-lines loaded in the affected memory-set 111 does not exceed the memory-set capacity. Since this "multi-line lock" functionality (implemented at e.g. method block 202) is performable by a module such as the multi-lock module 102 of the handling system 100 of Figure 1, functional details and considerations previously explained with respect to said module 102 may be similarly attributed to method block 202.

Handling methods according to Figure 2 may still further include (e.g. at method block 203) requesting, for each single-line classification with single memory-line, a single-line lock operation including locking the single memory-line 112 in the private cache 108a of the executor core 107a. Since this "single-line lock" functionality (implemented at e.g. method block 203) is performable by a module such as the single-lock module 103 of the handling system 100 of Figure 1, functional details and considerations previously explained with respect to said module 103 may be similarly attributed to method block 203.

Handling methods according to Figure 2 may yet further include (e.g. at method block 204) detecting completion of the execution of the instruction set and, upon said detection, requesting unlocking of each previously locked memory-line. Since this "unlocking" functionality (implemented at e.g. method block 204) is performable by a module such as the unlock module 104 of the handling system 100 of Figure 1, functional details and considerations previously explained with respect to said module 104 may be similarly attributed to method block 204.

Handling methods according to Figure 2 may yet further include (e.g. at method block 205) terminating execution of the method when e.g. an ending condition is detected. Such an ending condition may be determined by detecting e.g. completion of last unlocking within aforementioned "unlocking" functionality performed at e.g. method block 204.

In the particular example illustrated in Figure 2, methods-steps are executed in a particular order, but many other orders may be considered. For example, multi-line lock operations and single-line lock operations may be performed concurrently, or single-line lock operations may be executed before multi-line lock operations, or even multiline and single-line operations may be performed interleaved between them. That is, multi, single, multi, single lock operations may be performed in any relative order between them. It will be apparent to skilled people this variability of execution orders.

It is noted that the technical field of multi-core processors and, in particular, handling memory-lines between caches is very extensive and complex. Hence, well known principles and concepts in this field such as, e.g., coherence messages, exclusivity permissions, etc. between different memories (e.g. main memory, shared cache, private cache) in multi-core system have not been described in detail in order not to unnecessarily obscure the present description.

For example, it is well-known that locking a memory-line in a private cache implies that the private cache has to obtain first exclusivity permission from shared cache and, once this permission has been granted, the private cache proceeds to mark said memory-line as locked by the core associated to the private cache. It is also well-known that the memory-line to be locked may already be present in the private cache with exclusivity, in which case the private cache directly proceeds to mark the memory-line as locked. It is further well known the existence of coherence messages between caches in multi-core processors aimed at ensuring uniformity of shared resource data that ends up stored in multiple caches. All these and other similar conventional features of multi-core processors have not been described in the present disclosure, simply because they are assumed as already well known by skilled people. Indeed, explaining all these details could unnecessarily make the present disclosure interminable.

Although only a number of examples have been disclosed herein, other alternatives, modifications, uses and/or equivalents thereof are possible. All possible combinations of the described examples are thus also covered. The scope of the present disclosure should not be limited by particular examples but should be determined only by a fair reading of the claims that follow.

## Claims

1. Method of handling memory-lines affected by an instruction set to be executed in a multi-core processor with the affected memory-lines locked, the multi-core processor comprising a plurality of cores each having a private cache, and a main memory having a shared cache, the shared cache being structured in memory-sets, each memory-set having a capacity in memory-ways, each memory-way configured to contain a memory-line, and the method comprising:
classifying the affected memory-lines into one or more classifications in such a way that affected memory-line or lines mapped or mappable to same memory-set or affected memory-set are classified into same classification, each of said classifications being a single-line classification with single memory-line or a multi-line classification with multiple quantity of memory-lines conflicting to each other due to their mapping or mappability to the same or affected memory-set;
requesting a multi-line lock operation for each multi-line classification, the multi-line lock operation including locking the multiple conflicting memory-lines in the private cache of the core executing the instruction set, and loading the multiple conflicting memory-lines in the shared cache in such a way that a sum of the multiple quantity of conflicting memory-lines and a number of pre-existing conflicting memory-lines loaded in the affected memory-set does not exceed the memory-set capacity; and
requesting, for each single-line classification with single memory-line, a single-line lock operation including locking the single memory-line in the private cache of the core executing the instruction set.

2. Method of handling memory-lines according to claim 1, wherein the loading into the shared cache of the multiple conflicting memory-lines in the multi-line classification includes:
locking the affected memory-set in such a way that the affected memory-set is fully available for loading therein the multiple conflicting memory-lines in the multi-line classification and, therefore, the number of pre-existing conflicting memory-lines loaded in the affected memory-set is zero; and
loading the multiple conflicting memory-lines into the affected memory-set once locked.

3. Method of handling memory-lines according to claim 1, wherein the loading into the shared cache of the multiple conflicting memory-lines in the multi-line classification includes:
verifying whether there is available space in the shared cache for loading the multiple conflicting memory-lines and, in case of availability condition, loading the multiple conflicting memory-lines into the affected memory-set; wherein
the availability condition corresponds to whether the sum of the multiple quantity of conflicting memory-lines to be loaded and the number of pre-existing conflicting memory-lines loaded in the affected memory-set does not exceed the memory-set capacity.

4. Method of handling memory-lines according to claim 3, wherein the availability condition is determined based on a counter of available or empty memory-ways per memory-set.

5. Method of handling memory-lines according to claim 1, wherein the classifying of the affected memory-lines includes ordering the affected memory-lines according to ordering criterion predefined for all the cores of the multi-core processor; and wherein the loading into the shared cache of the multiple conflicting memory-lines in the multi-line classification includes:
determining, for each conflicting memory-line in the multi-line classification, a memory-way in the affected memory-set into which the conflicting memory-line is to be loaded according to predefined mapping criterion between memory-line positions within multi-line classification and memory-ways in memory-set, said mapping criterion being predefined for all the cores of the multi-core processor; and
loading each conflicting memory-line in the multi-line classification into the memory-way of the affected memory-set that has been determined for the conflicting memory-line.

6. Method of handling memory-lines according to claim 1, wherein the loading into the shared cache of the multiple conflicting memory-lines in the multi-line classification includes:
determining first available memory-way in the affected memory-set from which the multiple conflicting memory-lines in the multi-line classification are loadable sequentially into the affected memory-set; and
loading each conflicting memory-line in the multi-line classification sequentially from the determined first memory-way into the affected memory-set.

7. Method of handling memory-lines according to claim 6, wherein the first available memory-way is determined based on a counter pointing to first available memory-way in the affected memory-set.

8. Method of handling memory-lines according to any of claims 1 to 7, wherein the instruction set to be executed is constrained to affect an amount of memory-lines less than the memory-set capacity.

9. Method of handling memory-lines according to any of claims 1 to 7, wherein the instruction set to be executed is configured as a single atomic instruction whose execution causes execution of the instruction set atomically and constrained to affect an amount of memory-lines equal or less than the memory-set capacity.

10. Method of handling memory-lines according to any of claims 1 to 9, further comprising verifying whether occupancy of an eviction buffer to be used for evicting memory-lines exceeds a predefined occupancy threshold and, in said case, performing the eviction without using the eviction buffer once pertinent acknowledgement from main memory has been detected.

11. Method of handling memory-lines according to any of claims 1 to 10, further comprising detecting completion of the execution of the instruction set and, upon said detection, requesting unlocking of each previously locked memory-line.

12. Computer program comprising program instructions for causing a system or computing system to perform a method according to any of claims 1 to 11 of handling memory-lines affected by an instruction set to be executed in a multi-core processor.

13. Computer program according to claim 12 embodied on a storage medium or carried on a carrier signal.

14. System for handling memory-lines affected by an instruction set to be executed in a multi-core processor with the affected memory-lines locked, the multi-core processor comprising a plurality of cores each having a private cache, and a main memory having a shared cache, the shared cache being structured in memory-sets, each memory-set having a capacity in memory-ways, each memory-way configured to contain a memory-line, and the system comprising:
a classifier module configured to classify the affected memory-lines into one or more classifications in such a way that affected memory-line or lines mapped or mappable to same memory-set or affected memory-set are classified into same classification, each of said classifications being a single-line classification with single memory-line or a multi-line classification with multiple quantity of memory-lines conflicting to each other due to their mapping or mappability to the same or affected memory-set;
a multi-lock module configured to request a multi-line lock operation for each multi-line classification, the multi-line lock operation including locking the multiple conflicting memory-lines in the private cache of the core executing the instruction set, and loading the multiple conflicting memory-lines in the shared cache in such a way that a sum of the multiple quantity of conflicting memory-lines and a number of pre-existing conflicting memory-lines loaded in the affected memory-set does not exceed the memory-set capacity; and
a single-lock module configured to request, for each single-line classification with single memory-line, a single-line lock operation including locking the single memory-line in the private cache of the core executing the instruction set.

15. A multi-core processor including, for each core in the multi-core processor, a system according to claim 14 for handling memory-lines affected by an instruction set to be executed in the multi-core processor.
